(19) Europäisches Patentamt / European Patent Office / Office européen des brevets

(11) **EP 4 779 526 A1**

(12) **EUROPEAN PATENT APPLICATION**

(43) Date of publication:
22.07.2026 Bulletin 2026/30

(21) Application number: 25227733.0

(22) Date of filing: 30.12.2025

(51) International Patent Classification (IPC):
*G06N 3/098* (2023.01)    *G06N 20/00* (2019.01)

(52) Cooperative Patent Classification (CPC):
G06N 20/00; G06N 3/098

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **21.01.2025 FI 20255035**

(71) Applicant: **Nokia Solutions and Networks Oy
02610 Espoo (FI)**

(72) Inventors:
- **PAPADIS, Nikolaos
Murray Hill (US)**
- **BHATIA, Randeep
Green Brook (US)**
- **KODIALAM, Muralidharan
Austin (US)**
- **LAKSHMAN, TV
Morganville (US)**

(74) Representative: **Bryers Intellectual Property Ltd
Bristol & Bath Science Park
Dirac Crescent, Emerson's Green
Bristol BS16 7FR (GB)**

(54) **ANOMALY DETECTION FOR DIGITAL TWINS USING EMBEDDINGS-DRIVEN PERSONALIZED FEDERATED LEARNING**

(57) Described herein is a client device, configured to provide a user service and to establish communication with a server device for providing a Digital Twin Machine Learning, ML, Model training service for said client device, comprising: at least one processor, and at least one memory storing instructions that, when executed by the at least one processor, cause the client device at least to: receive, from the server device, a plurality of models for providing estimation for at least one parameter associated with the user service; apply, for each of the received plurality of models, data at the client device associated with the user service to a model evaluation function, and determine, for the each model, a corresponding model evaluation value for indicating performance of the each model in providing estimation for said at least one parameter associated with the user service; obtain, from the server device, an indicator for indicating a model selected by the server device for the client device among the received plurality of models based on all of the determined model evaluation values for the received plurality of models; train and/or update the selected model based on said data at the client device associated with the user service; and send, to the server device, information relating to the trained and/or updated selected model for the server device to further update the selected model.

S52: Receive from server:
- $K$ models

S53: Locally compute and send to Server
- $K$-dim Loss Vector (embedding)

S57: Receive from server:
- Model assignment for client

S58: Locally compute and send to Server:
- Assigned model (and optionally gradients) updated using local data

S54: Cluster clients based on their loss vectors (embeddings) using vector clustering algorithm

S55: Compute new assignment of clients to models
- Assign clusters to models first using matching algorithm
- Assign clients in cluster to their selected model

S56: Send new model assignment to clients

S59: Compute new $j$-th model (do for all $1 \leq j \leq K$):
- Average all updates (model parameters or gradients) received from clients for model $j$

S51: Send updated models to clients

Client 1 · · · Client M → Server

**Fig. 5**

**Description**

TECHNOLOGY

The present disclosure relates to Machine Learning technologies in a distributed environment, in particular to Digital Twins technologies using Machine Learning, more in particular to Federated learning applied to Digital Twins.

BACKGROUND

Any discussion of the background art throughout the specification should in no way be considered as an admission that such art is widely known or forms part of common general knowledge in the field.
Data used in Machine Learning (ML) usually comes from distributed sources. Further, the data might not be able to move because of privacy, bandwidth, legal, or policy constraints, for example:

- Data generated by IoT devices, phones or digital twins that cannot leave the device or a certain domain/network;
- Data generated by network elements (e.g., routers) that cannot move across countries/jurisdictions; and
- Data generated by hospitals that cannot leave a hospital system.

Hence, ML algorithms need to train on distributed data without moving the data to a single central point. The goal is therefore to train the models on distributed data but also get the benefit of centrally trained systems.
The unique challenges for ML in distributed environments include:

- Privacy: data owners do not want data to leave their device/network, that is, data is not allowed to be moved to a server for being trained there; and
- Data scarcity: training model based on one device's small dataset is not adequate, that is, training models only at the clients does not provide sufficiently promising result.

One example of applying ML in distributed environments is Digital Twins (DTs). The growing adoption of DTs is being driven by their unique ability to replicate the behavior, characteristics, and performance of their physical counterparts in real-time, enabling continuous monitoring, in-depth analysis, and optimization of complex systems.
DTs are usually provided with machine learning models for the corresponding client device to compute loss based on output and input and perform desired task (e.g., determine if input is anomalous or not in an unsupervised setting, or predict class label in a supervised setting).
An example of a significant application of DTs is in anomaly detection. By leveraging real-time data from sensors, network elements, and Internet-of-Things devices, DTs can compare this data to a predefined baseline or expected behavior, identifying anomalies when deviations occur. Furthermore, they can recognize patterns in the data collected over time and detect anomalies when these patterns are disrupted, triggering automated alerts that ensure prompt attention from owners, operators, or maintenance personnel.
However, building effective machine learning models for anomaly detection using DTs often requires large amounts of high-quality training data. Relying solely on data from a single DT of a single machine or smart home may not be sufficient, as it may not capture the full range of potential anomalies or edge cases. This highlights the need for diverse and comprehensive datasets, as well as advanced analytics and machine learning techniques, to unlock the full potential of DTs in anomaly detection.
To address the above challenges, data from distributed sources (e.g., from multiple DTs of similar physical entities in different settings) can be combined to form a more comprehensive dataset. For instance, a dataset of all distributed sources (e.g., from all DTs of smart homes in a locality or town) can provide a more robust and representative sample. However, this approach raises two significant concerns:

1. Privacy: Much of the data collected by distributed sources (e.g., DTs) can be sensitive and private, making it difficult to share or aggregate without compromising individual privacy.
2. Operational variability: Even if the distributed sources (e.g., DTs) are of similar physical entities, differences in operational settings, usage patterns, or environmental conditions can lead to varying baselines and for example anomaly definitions. As an example, a behavior that is considered normal for one entity may be anomalous for another, making it challenging to develop a unified anomaly detection model.

To overcome these challenges, it is essential to develop solutions that balance data sharing and privacy concerns while accounting for operational variability.
In particular, there is a need to provide a machine learning approach in a distributed environment with improved privacy protection for the local data at the client end as well as improved training for the ML models considering in particular discrepancies between client devices and/or local data from those client devices.

SUMMARY

In accordance with a first aspect of the present disclosure, there is provided a client device, configured to provide a user service and to establish communication with a server device for providing a Digital Twin Machine Learning, ML, Model training service for said client device, comprising:

at least one processor, and
at least one memory storing instructions that, when executed by the at least one processor, cause the client device at least to:

receive, from the server device, a plurality of models for providing estimation for at least one parameter associated with the user service;
apply, for each of the received plurality of models, data at the client device associated with the user service to a model evaluation function, and determine, for the each model, a corresponding model evaluation value for indicating performance of the each model in providing estimation for said at least one parameter associated with the user service;
obtain, from the server device, an indicator for indicating a model selected by the server device for the client device among the received plurality of models based on all of the determined model evaluation values for the received plurality of models;
train and/or update the selected model based on said data at the client device associated with the user service; and
send, to the server device, information relating to the trained and/or updated selected model for the server device to further update the selected model.

In some examples, the client device is further configured to obtain a selected model by:

sending, to the server device, a model evaluation vector comprising the plurality of determined model evaluation values for the received plurality of models; and
receiving, from the server device, an indicator for indicating a model selected by the server device among the received plurality of models for the client device based on the model evaluation vector.

In some examples, the client device is further configured to obtain a selected model by:

determining, for the each model, a corresponding model selection preference probability of selecting the each model, wherein the corresponding model selection preference probability is determined based on applying a pre-configured probability density function to the determined model evaluation value for the each model;
wherein the model evaluation vector further comprises model selection preference probabilities determined for the plurality of models, for the server device to select one of the plurality of models; and
receiving, from the server device, the selected model.

In some examples, the client device is further configured to train and/or update the selected model by:

updating a value of at least one model parameter of the selected model based on said data at the client device; and
sending, to the server device, the updated value of the at least one model parameter of the selected model.

In some examples, the client device is further configured to train the selected model by a gradient descent optimization method.
In some examples, the client device is further configured to train and/or update the selected model by:

determining, for the selected model, an updated gradient value of the model evaluation function; and
sending, to the server device, the updated gradient value of the model evaluation function for the selected model.

In some examples, the client device is configured to perform the steps according to any one of the first aspect and its above related examples in a current iteration,

wherein said received plurality of models are updated by the server device in a previous iteration directly preceding the current iteration,

wherein the client device is further configured to receive from the server device, in a next iteration directly following the current iteration, the plurality of models that are further updated by the server device in the current iteration,

wherein the client device is further configured to repeat the steps according to any one of the first aspect and its above related examples in the next iteration for the plurality of models.

In some examples, the model evaluation function is a loss function indicating a loss when applying a model to provide estimation for the at least one parameter associated with the user service.

In some examples, for a model, a smaller loss value given by the loss function indicates a higher value of a model selection preference probability given by the pre-configured probability density function.

In accordance with a second aspect of the present disclosure, there is provided a server device, configured to establish communication with a plurality of client devices for providing a Digital Twin Machine Learning, ML, Model training service for the plurality of client devices, comprising:

at least one processor, and

at least one memory storing instructions that, when executed by the at least one processor, cause the server device at least to:

send, to a subset of the plurality of client devices, a plurality of models for being trained and/or updated to provide estimation for at least one parameter associated with the user service,

receive, from each client device included in the subset, a corresponding model evaluation vector, wherein said corresponding model evaluation vector comprises, for each of the plurality of models, a corresponding model evaluation value indicating performance of the each model in providing estimation for the at least one parameter associated with the user service;

select, for the each client device included in the subset, a corresponding model from the plurality of models, based on all of the evaluation vectors received from said subset of client devices;

send, to the each client device included in the subset, an indicator for indicating which model among the sent plurality of models is correspondingly selected by the server device for the at least one client device;

receive, from the each client device included in the subset, information relating to the correspondingly selected model locally trained and/or updated by the each client device included in the subset; and

centrally update the selected models for client devices included in the subset based on said information.

In some examples, the server device is further configured to select a corresponding model for the each client device included in the subset by:

clustering the client devices included in the subset based on clustering, into a plurality of groups, all of the model evaluation vectors received from said subset of client devices,

wherein each client device included in the subset is clustered into one group based on a vector clustering method; and

selecting a corresponding model for each group.

In some examples, the server device is further configured to select for each group a corresponding model by one-to-one matching the each group to a corresponding model based on a matching method.

In some examples, said information comprises a value of at least one model parameter and/or a gradient value of the model evaluation function.

In some examples, the server device is further configured to centrally update the selected models for the client devices included in the subset by:

averaging, for each group, values included in said information, wherein preferably weights of the client devices in the each group in the averaging correspond to amounts of data at the client devices in the each group.

In some examples, the server device is further configured to:

determine an updated value of at least one model parameter of the correspondingly selected model based on an updated gradient value of the model evaluation function for the correspondingly selected model.

In some examples, the server device is further configured to randomly initialize the plurality of models.

In some examples, the server device is configured to perform the steps according to any one of the second aspect and its above related examples in a current iteration,

wherein said received plurality of models are updated by the server device in a previous iteration directly preceding the current iteration,

wherein the server device is further configured to send to client devices included in another subset, in a next iteration directly following the current iteration, the plurality of models that are updated by the server device in the current iteration,

wherein the server device is further configured to repeat the steps according to any one of the second aspect and its above related examples in the next iteration for the plurality of models updated in the current iteration for the another subset of client devices.

In some examples, the server device is configured to stop said iteration when the clustering result has not been modified for a pre-determined number of iterations, wherein in each of said pre-determined number of iterations the losses of the selected models for corresponding client devices are lower than a pre-configured threshold.

In accordance with a third aspect of the present disclosure, there is provided a system for providing a Digital Twin Machine Learning, ML, Model training service for a plurality of client devices, said plurality of client devices being configured to provide a user service, said system comprising a plurality of client devices in accordance with any one of the first aspect and its related examples and at least one server device in accordance with any one of the second aspect and its related examples.

In accordance with a fourth aspect of the present disclosure, there is provided a method of a client device, configured to provide a user service and to establish communication with a server device for providing a Digital Twin Machine Learning, ML, Model training service for said client device, the method comprising:

receiving, from the server device, a plurality of models for providing estimation for at least one parameter associated with the user service;

applying, for each of the received plurality of models, data at the client device associated with the user service to a model evaluation function, and determine, for the each model, a corresponding model evaluation value for indicating performance of the each model in providing estimation for said at least one parameter associated with the user service;

obtaining, from the server device, an indicator for indicating a model selected by the server device for the client device among the received plurality of models based on all of the determined model evaluation values for the received plurality of models;

training and/or updating the selected model based on said data at the client device associated with the user service; and

sending, to the server device, information relating to the trained and/or updated selected model for the server device to further update the selected model.

In accordance with a fifth aspect of the present disclosure, there is provided a method of a server device, configured to establish communication with a plurality of client devices for providing a Digital Twin Machine Learning, ML, Model training service for the plurality of client devices, the method comprising:

sending, to a subset of the plurality of client devices, a plurality of models for being trained and/or updated to provide estimation for at least one parameter associated with the user service,

receiving, from each client device included in the subset, a corresponding model evaluation vector, wherein said corresponding model evaluation vector comprises, for each of the plurality of models, a corresponding model evaluation value indicating performance of the each model in providing estimation for the at least one parameter associated with the user service;

selecting, for the each client device included in the subset, a corresponding model from the plurality of models, based on all of the evaluation vectors received from said subset of client devices;

sending, to the each client device included in the subset, an indicator for indicating which model among the sent plurality of models is correspondingly selected by the server device for the at least one client device;

receiving, from the each client device included in the subset, information relating to the correspondingly selected model locally trained and/or updated by the each client device included in the subset; and

centrally updating the selected models for client devices included in the subset based on said information.

In accordance with a sixth aspect of the present disclosure, there is provided a method of a system for providing a Digital Twin Machine Learning, ML, Model training service for a plurality of client devices, said plurality of client devices being configured to provide a user service, said system comprising a plurality of client devices and at least one server device, the method comprising the steps according to the fourth aspect performed by the plurality of client devices and/or the steps according to fifth aspect performed by the at least one server device.

In accordance with a seventh aspect of the present disclosure, there is provided a computer program comprising instructions for causing an apparatus to perform the method according to the fourth aspect, or for causing an apparatus to perform the method according to the fifth aspect.

In accordance with a seventh aspect of the present disclosure, there is provided a memory storing computer readable instructions for causing an apparatus to perform the method according to the fourth aspect, or for causing an apparatus to perform the method according to the fifth aspect.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

BRIEF DESCRIPTION OF THE DRAWINGS

Example embodiments of the disclosure will now be described, by way of example only, with reference to the accompanying drawings in which:

Figure 1 schematically illustrates an example of a typical federated learning architecture;
Figure 2 schematically illustrates an example of a typical personalized federated learning architecture;
Figure 3 schematically illustrates an example of an ML method applied to a client device in a distributed environment according to an example embodiment of the present disclosure;
Figure 4 schematically illustrates an example of an ML method applied to a server device in a distributed environment according to an example embodiment of the present disclosure;
Figure 5 schematically illustrates an example of an ML method applied to a distributed environment according to an example embodiment of the present disclosure;
Figure 6 schematically illustrates an example of a matching method for assigning a cluster of clients to a corresponding model according to an example embodiment of the present disclosure;
Figure 7 schematically illustrates an example of an ML method applied to a distributed environment according to an example embodiment of the present disclosure; and
Figure 8 schematically illustrates an example of an inference method according to an example embodiment of the present disclosure.

DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR (New Radio), without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth®, personal communications services (PCS), ZigBee®, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or application capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:

Option 1 (1A-like split):

- The function split in this option is similar to the 1A architecture in DC. RRC is in the central unit. PDCP, RLC, MAC, physical layer and RF are in the distributed unit.

Option 2 (3C-like split):

- The function split in this option is similar to the 3C architecture in DC. RRC and PDCP are in the central unit. RLC, MAC, physical layer and RF are in the distributed unit.

Option 3 (intra RLC split):

- Low RLC (partial function of RLC), MAC, physical layer and RF are in the distributed unit. PDCP and high RLC (the other partial function of RLC) are in the central unit.

Option 4 (RLC-MAC split):

- MAC, physical layer and RF are in the distributed unit. PDCP and RLC are in the central unit.

Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:

- The physical layer offers to the MAC sublayer transport channels;
- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. To segmentation;
- Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g., RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:

- store the AS context;
- transfer unicast data to/from the UE;
- monitor control channels associated with the shared data channel to determine if data is scheduled for the data channel;
- provide channel quality and feedback information;
- perform neighboring cell measurements and measurement reporting.

The RRC protocol includes e.g. the following main functions:

- RRC connection control;
- measurement configuration and reporting;
- establishment/modification/release of measurement configuration (e.g., intra-frequency, inter-frequency and inter-RAT measurements);

- setup and release of measurement gaps;
- measurement reporting.

The general functions and interconnections of the described elements and functions, which also depend on the actual network type, are known to those skilled in the art and described in corresponding specifications, so that a detailed description thereof may be omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g., an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

As illustrated above, the present disclosure generally seeks to provide improved ML methods for a distributed environment where privacy of local data at client devices needs better protection and the benefits of a central training at the central server end based on versatile local data at different client devices need still to be utilized for improved training of the ML models to be applied at the client devices.

In view of the above, it is proposed in accordance with the present disclosure ML methods for personalized model training on diverse distributed data, for example, FL-based ML methods. In particular, it is proposed in accordance with the present disclosure joint conduct of client clustering based on their embeddings and personalized model building, where clustering informs model building and vice versa. In particular, clustering may be performed at the central server based on embeddings (e.g., loss vectors) provided by the client devices and information relating to the updated models may be provided between the server and the client devices for improving model training while respecting privacy of the local data.

As generally well-known to one skilled in the art, in ML, embedding refers to a transformation that reduces the complexity of raw data to a lower-dimensional representation, while preserving meaningful relationships and structures within the data.

The proposed solution provides the following benefits:

- Privacy: Data does not need to leave the client's device

- Personalization: We leverage data diversity, with a separate model trained and tailored to each data group's data and client cluster's needs
- Fast convergence: Algorithms achieve correct clustering and train models with low loss in only few rounds
- Efficiency: Significantly improved model efficiency and accuracy beyond state of the art, as shown by experiments on real data
- Robustness: Algorithm output correctness is not sensitive to initialization, unlike state of the art that is error-prone (i.e. if not given special initial model parameters, it outputs incorrect results)
- Applicability in both supervised and unsupervised settings: Access to labeled data (supervised setting) is practically much harder, especially in networking and anomaly detection applications. The proposed method in accordance with the present disclosure has the advantage of not requiring labels for their training, hence work in both settings.

References are now made to the figures. In particular, it is to be noted that identical or like reference numbers used in the figures of the present disclosure may, unless indicated otherwise, indicate identical or like elements, such that repeated description thereof may be omitted for reasons of conciseness.

In the following, detailed background information relating to Federated Learning and Personalized Federated Learning is provided, which however is merely for purposes of better understanding the prior art and their disadvantages and therefore should not be understood as posing in any manner a limitation to the solution provided in accordance with the present disclosure.

**Federated Learning: what it is, why it is needed, how it works, applications**

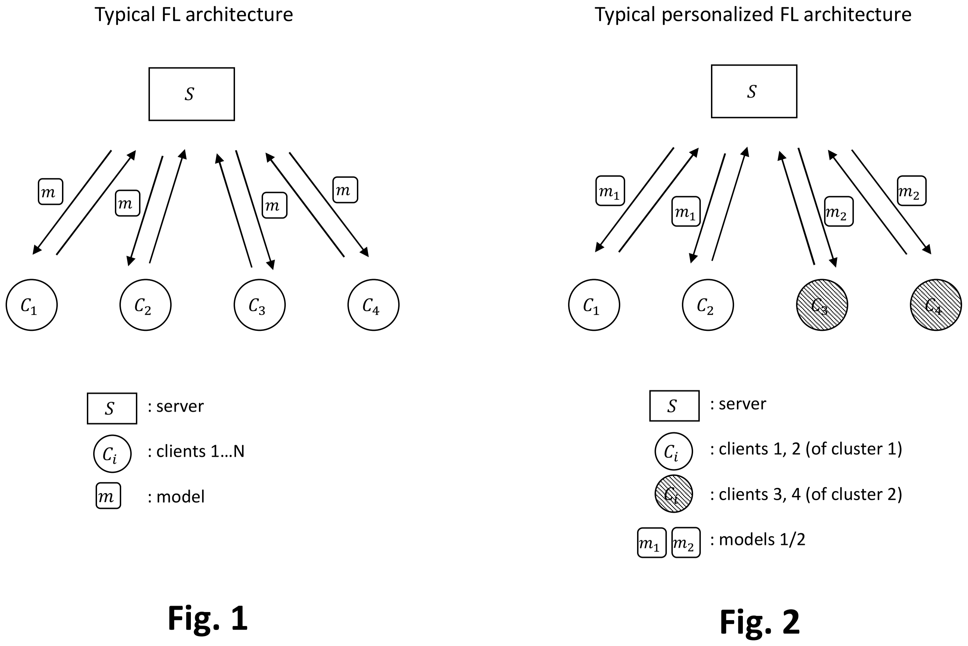

**Figure** 1 schematically illustrates an example of a typical federated learning architecture.

Machine learning (ML) has been advancing tremendously over the past several years. Building and training today's biggest centralized ML systems usually require loads of capital and computation equipment, such as GPUs. Meanwhile, training requires large amounts of data, which are not always available, restricting the systems' applicability. However, nowadays data is mostly generated and/or stored distributedly. Hence, privacy is playing an increasingly important role, as the data owners do not want to share their private data for training someone else's centralized model, and regulations such as the General Data Protection Regulation (GDPR) imply consequences for violations. On the other hand, each individual owner's data might not be sufficient for training a good enough model locally. These challenges are addressed by the relatively nascent paradigm of Federated Learning (FL), first introduced by [1].

In the FL paradigm, the data does not need to be stored at or transmitted to a single place for training, but instead, the local data of a collection of data holders-clients is utilized to train a model that will work for all of them simultaneously. The standard FL architecture comprises a server and multiple clients. The goal is to train a model on the distributed data held by the clients. To do so, the server initializes a model and sends it to a subset (or all) of the clients, where it is trained on each client's local data. Then, the clients transmit the parameters of the locally trained models back to the server. The server gathers the updated parameters from all clients and aggregates them according to some aggregation method (the simplest one is averaging, or weighted averaging according to how much data each client trained the model on - the algorithm is called federated averaging [1]). The resulting parameters are sent back to the clients for another round of local training, the new parameters are aggregated again on the server, and so on.

This process has several benefits: first, it preserves the clients' privacy, as only model parameters and no client data are being transmitted to the server. Second, at the same time, this is much more communication-efficient, as model parameters are typically only a fraction of the size of the client data that would be transmitted to the server in a centralized architecture. Third, it allows the server to train a model based on data from sources otherwise inaccessible (especially in cases where no equivalent centralized dataset exists) and to improve the trained model leveraging the variety of each client's data. Finally, FL training does not require huge amounts of computation, as clients only hold little data, and the overall new model comes from centrally combining the client models.

The above characteristics make FL particularly suitable for applications where data is distributed by nature (as is the case for example in edge computing) or segregated in silos (e.g., patient data residing in hospital premises). Perhaps the most well-known FL application is next-word prediction for users typing on mobile phones: local training happens on each user's phone on the few samples-words they produce (but which should not leave the device), and the models of different users are aggregated in order to produce a global model training on enough data while respecting privacy, which is then sent to the users' phones. Another application with a great potential impact is training ML models for diagnoses of various types of diseases using data from siloed databases maintained by hospital systems. FL would allow federated training and aggregation without compromising the sensitivity of the nature of the data.

The typical FL architecture is presented in **Figure** 1. Therein, one server S communicates with a plurality of clients $C_i$ (wherein e.g., $i = 1... N$, wherein e.g., $N = 4$). The server S sends a model $m$ to the plurality of clients. The clients train the model on their private data and send updated model to the server, and the server averages the updates.

Benefits of typical FL: Training on otherwise-inaccessible data with

- Data privacy: Data does not leave client, only model updates are exchanged;
- Communication efficiency: only models are communicated, much smaller in size than raw data; and
- Small computational load per device: devices only train the model on their small private dataset.

Example non-exhaustive applications of typical FL:

- Next-word prediction for smartphone keyboards
- Training diagnostic models on hospital/patient data
- Anomaly detection on distributed network/digital twin data

**Personalized Federated Learning: why it is needed, state of the art and limitations**

**Figure** 2 schematically illustrates an example of a typical personalized federated learning architecture.

A challenge in FL arises when the data of the clients is not independently and identically distributed (non-i.i.d.). The single model that the server constructs through aggregation is such that it performs well on the data of an "average client", thus, in this situation, it will not generalize well for clients with local data that differ significantly from the global data distribution [2]. Hence, the need arises for tailoring the trained models to each client's local data, or, in other words, personalized federated learning (PFL).

To better understand PFL, it is necessary to position PFL within the spectrum of ML architectures that can be implemented in the setting interested in, i.e. a setting with multiple clients each with their own data and a server that acts as a coordinator. One extreme is the centralized global model: the clients transmit their data to the server and the server trains a single model centrally, which it later distributed to the clients. This model though will not perform well on client data that is quite different from the global train data distribution. Training a single model via traditional FL based on all the clients' data will face the same issue. The other extreme is only training local models at each client, only on each client's data. These models will perform well on their respective client's data but will not generalize to data of other clients or previously unseen. PFL aims to get the best of both worlds and achieve the global model's generalization together with the local models' alignment with the client data distributions [3].

One avenue for PFL is personalization through clustering. In settings where clients can be grouped based on their nature (e.g. same type of devices or users) or their data, one can cluster the clients and train personalized models, one for each cluster, as is shown in **Error! Reference source not found..**

For example, in **Figure 2,** one server S communicates with a plurality of clients $C_i$ (wherein e.g., there are 4 clients), wherein the clients are clustered into different groups, e.g., clients 1, 2 in group or cluster 1, and clients 3, 4 in group or cluster 2. The server S sends a plurality of models $m_k$ to the plurality of clients. In particular, the server S sends to clients 1, 2 in group or cluster 1 model $m_1$ and sends to clients 3, 4 in group or cluster 2 model $m_2$. The clients train the respectively received model on their private data and send respectively updated models to the server, and the server averages the updates for each model that is updated by the corresponding cluster/group.

The above-described general approach of personalization through clustering has been adopted by certain works. Ghosh et al. [4] assume that clients are partitioned into different clusters (e.g., according to each user's interests, as happens in recommendation systems applications) and one model needs to be trained per cluster. The cluster identities of each client are unknown, so the problem is to identify each client's cluster while at the same time to distributedly train the model corresponding to each cluster. Their algorithm, called IFCA - Iterated Federated Clustering Algorithm - alternates between training (minimizing the loss function of each client on its local data) and aggregating the model updates at the server, and estimating the client's cluster identity based on the client's data lowest loss on each of the cluster models. The algorithm is supervised (based on labels of data points) accompanied by certain theoretical guarantees for convergence under some assumptions on good initialization and on the (non-i.i.d.) data distributions.

Along similar lines, Mansour et al. [3] study whether personalization can be achieved by an intermediate model between the global and local models and propose clustered FL as one of the formulations for personalization, with a logic very similar to IFCA, i.e. assigning each client to the model for which it has the lowest loss. Werner et al. [5] do not use the model parameters to cluster clients, but instead they use threshold clustering on the model gradients on each client's data. Dennis et al. [6] devise a federated version of the k-means algorithm for clustering, with a hierarchical structure and a focus on low communication cost. The clustering happens based on the data points themselves. Unlike the above works, the solution proposed in accordance with the present disclosure takes the full picture into account and clusters based on all the loss/gradient vectors from all clients at the same time.

Sattler et al. [7] make use of the cosine similarity between gradients of different clients to recursively partition them into subgroups of maximum dissimilarity, thus producing a hierarchy of models of increasing specificity. In contrast, the method in accordance with the present disclosure runs a vector clustering algorithm (e.g., k-means) and clusters all clients at once and not by splitting the set of clients into two recursively. Also, [7] assumes that all clients are participating in every FL round, while the present disclosure does not impose such an assumption.

Most works on PFL consider labeled data and a supervised learning setting. A notable exception is the work by Chung et al. [8], which proposes UIFCA, an IFCA-like algorithm tailored for the unsupervised setting (where data has no labels). For each client, cluster assignment happens locally as in IFCA, again by selecting the cluster based on the lowest loss criterion. The model used in the paper is a generative model called normalizing flow model. The clustering accuracy, however, that the UIFCA algorithm achieves in experiments with the MNIST handwritten digit dataset [9] is mediocre. The method in the present disclosure, in contrast, applies to both supervised and unsupervised settings and show excellent performance on MNIST.

Anomaly detection (AD) in the context of digital twins (DTs) is starting to gain considerable prominence [10], [11]. One of the key challenges for AD in DTs is the lack of labeled data. Consequently, many conventional anomaly detection algorithms do not work well [10] for AD in DTs and unsupervised ML approaches such as Bayesian online change point methods and Generative Adversarial Network (GAN) are being considered [10], [11]. Another challenge for AD in DTs remains in the processing of large amounts of data. Because of this, an edge computing-based DT framework for AD is proposed in [12]. However, there are no prior works that take advantage of Federated Learning (FL) in this context as the present disclosure does. With FL the present disclosure can not only leverage edge computing but can also make the best use of the computational resources in the cloud in the most effective way while minimizing communication cost and while maintaining privacy of local data.

The following drawbacks are present in the prior art, e.g., as disclosed in [13]:

- It only works for recommendation systems. For instance, it cannot be applied to anomaly detection of network data. The present disclosure applies more generally to any ML use case and field, including anomaly detection.
- The embeddings they use are tailored specifically for recommendation systems (user and item embeddings), which have no equivalence in other ML use cases, such as anomaly detection. The embeddings proposed in accordance with the present disclosure are model loss vectors and are applicable in every ML use case.
- The privacy part of their method is weak, as it requires sharing both user and item embeddings with the server. Moreover, these embeddings may also be shared with other users (although IDs of users are encrypted/anonymized when their embeddings are sent by server to other users). With this information, the server may be able to estimate each user's preference for each item (by evaluating the similarity between the user's embedding and item embeddings), which is the part that needs to be kept private. Moreover, each user may also learn this information for other users (although without knowing which specific user the information is for). Also, there is an assumption that the server is trusted, i.e. that the server would not collude with users and not tell them which information came from which user. The method in accordance with the present disclosure does not share any extra information between clients and servers besides what is shared in traditional federated learning (i.e. model parameters/gradients and losses), and thus is fully privacy-preserving.

To summarize, there exists the need and motivation for modifying FL towards PFL. In particular, FL is not adequate to capture the non-i.i.d. distribution of the data, i.e. in cases where data at different clients might have different nature/distribution, e.g.:

- Network traffic data might belong to different types of digital twins/IoT devices (cameras, sensors, etc.); and
- Temperature sensors in one area might generate different data from temperature sensors in another area.

Thus, training one model for all clients is not enough and therefore there is need for multiple personalized models, for example, by simultaneously grouping similar clients/data streams and train one model per group (cluster).

Benefits of PFL:

- Leveraging multiple clients' datasets without moving the data to a central place; and
- Each cluster's separate model will be tailored to and perform well on the cluster's data.

Example non-exhaustive applications of PFL:

- e.g., in network security & anomaly detection, network optimization problems.

Hence, there is in particular a need to provide a novel machine learning approach based on federated learning, leveraging embeddings and clustering to enable the development of robust and effective anomaly detection models for DTs, while respecting individual privacy and accommodating operational differences.

In particular, the following problems are addressed:

- Federated Learning-based scalable, personalized model training (e.g., for anomaly detection), leveraging data of a large number of clients (e.g., Digital Twins), while preserving privacy.

- Significant improvements over state-of-the-art methods, most of which fail to find good solutions and get stuck in bad local minima.
- Training that does not require any special initialization and works even when starting in a random state, as opposed to state-of-the-art personalized federated learning model training algorithms that only work under specially selected, limited starting states and because of which they exhibit poor performance on common datasets (e.g., MNIST).
- Design of algorithms applicable to both supervised and unsupervised settings in any personalized federated learning setting.
- Fast convergence to a good solution.

The present disclosure presents a novel approach of building personalized machine learning models (e.g., for anomaly detection) for individual clients in a distributed environment (e.g., Digital Twins). By combining joint clustering, federated learning and embeddings generation, the proposed solution effectively addresses operational variabilities across diverse client datasets, while maintaining data privacy.

Anomaly detection is an example of an application in an unsupervised setting. More generally in the unsupervised setting, the proposed method can be used for data clustering applications. In the supervised setting, the proposed method can be used for class label prediction, which encompasses all classification applications. Additionally, the proposed method can be used for regression applications (i.e. where the available data is used to predict future outcomes).

In general, the proposed approach is able to assign a unique embedding for each client based on their data characteristics, ensuring that clients with similar data are proximally located in the embedding space, while those with diverse data are separated. These embeddings are generated locally by each client in a privacy-preserving manner, without sharing data, by measuring losses or gradients on multiple machine learning models. As training progresses, the embeddings improve in correlation to the client's data, enabling a highly novel and effective mechanism for embedding generation and improvement during the federated learning process.

Furthermore, client embeddings are used for identifying clusters of clients whose data share similar characteristics. This enables the efficient grouping of similar clients and the construction of a single, personalized model per group, with minimal communication and computation. The novelty of the proposed approach lies in particular in the joint conduct of client clustering based on their embeddings and personalized model building, where clustering informs model building and vice versa. Notably, in the proposed solution the server possesses global knowledge of all client embeddings, allowing for globally optimal clustering of clients. This contrasts with existing solutions, where clients must rely on local knowledge to select their group, potentially leading to suboptimal assignments.

Moreover, the proposed solution simultaneously builds multiple personalized machine learning models, one for each client data type, through a novel combination of federated learning and clustering of client embeddings. Specifically, for each round of federated learning, the server selects assignments of clients to machine learning models based on the clustering of their embeddings. This ensures that machine learning models are trained only by clients whose data have similar characteristics (which is particularly important for anomaly detection). By avoiding the mixing of training data from diverse clients, the approach in accordance with the present disclosure prevents the development of ineffective machine learning models, where what may be normal for one set of clients may be anomalous for another set.

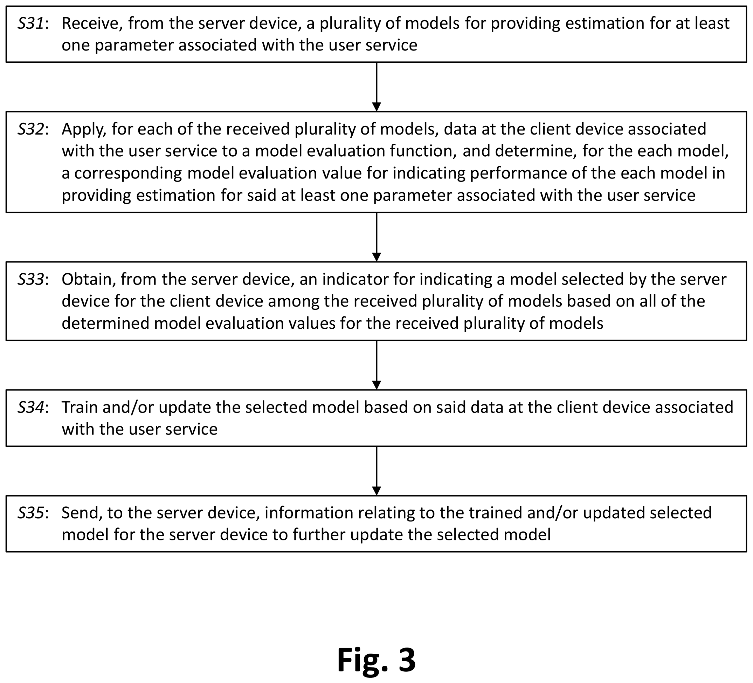

**Figure** 3 schematically illustrates an example of an ML method applied to a client device in a distributed environment according to an example embodiment of the present disclosure. This distributed environment preferably comprises a server device and this client device. Accordingly, it is also provided a client device for performing such a method. In particular, the client device is configured to provide a user service and to establish communication with a server device for providing a Digital Twin Machine Learning, ML, Model training service for said client device. The Digital Twin ML Model training service refers to a service for training the ML model in the Digital Twin scenario.

The method in **Figure 3** comprises the following steps, performed by the client device. In other words, the client device is configured to perform the following steps.

At step S31: the client device receives, from the server device, a plurality of models for providing estimation for at least one parameter associated with the user service. Therein, preferably the step of receiving a model comprises receiving at least one model parameter of the model.

At step S32: the client device applies, for each of the received plurality of models, data at the client device associated with the user service to a model evaluation function, and determines, for the each model, a corresponding model evaluation value for indicating performance of the each model in providing estimation for said at least one parameter associated with the user service. The data at the client device refers to the local data stored at the client device. The model evaluation function is preferably a loss function, wherein applying a loss function to a ML model by calculating a loss value rendered by an output of the ML model compared to an expected output value is part of the very basic skills in the field of ML. The client device therefore provides for each model an evaluation in its performance in providing an estimation for the user service.

At step S33: the client device obtains, from the server device, an indicator for indicating a model selected by the server device for the client device among the received plurality of models based on all of the determined model evaluation values for the received plurality of models. As the client device has received in step S31 the models or has previously stored locally the models, i.e., their model parameters, it is only necessary to be informed of an indicator for the selected model.

At step S33, the selection of the model may be provided by the server device, and/or by the client device.

For example, the client device sends, to the server device, a model evaluation vector comprising the plurality of determined model evaluation values for the received plurality of models; and receives, from the server device, an indicator for indicating a model selected by the server device among the received plurality of models for the client device based on the model evaluation vector.

Additionally or alternatively, the client device determines, for the each model, a corresponding model selection preference probability of selecting the each model, wherein the corresponding model selection preference probability is determined based on applying a pre-configured probability density function to the determined model evaluation value for the each model, wherein the model evaluation vector further comprises model selection preference probabilities determined for the plurality of models, for the server device to determine to select one of the plurality of models; and the client device receives, from the server device, the selected model. In the case of the model evaluation function being a loss function, for a model, a smaller loss value given by the loss function indicates a higher value of a model selection preference probability given by the pre-configured probability density function.

For the probability distribution that is applied on the losses and according to which each client chooses the model to update in the PFC method/algorithm, softmax may be applied, or the probability can be any function that is inversely proportional to the (absolute value of the) loss (the higher the absolute loss, the lower the probability), for example proportional to - |loss| or 1/|loss|, with values normalized to sum to 1. A strictly inversely proportional function is one possibility. Other possibilities such as the softmax function are not inversely proportional in the mathematical sense, but satisfy what is required according to the present disclosure: "the higher the absolute loss, the lower the probability". This latter part is for picking a suitable function.

With the above alternative using model selection preference probabilities, the client picks a preferred model. It sends its preference to the server, which then selects a model for the client for the next round. Specifically, the model evaluation vector that the client sends to the server contains its preference probabilities for each model.

Note that in the softmax/probability case where each client could locally select the model, the ultimate model choice for client is made by the server, which allows for the possibility that the server could override the client's preference based on some global objective.

At step S34: the client device trains and/or updates the selected model based on said data at the client device associated with the user service. The training and/or updating of the selected model comprises preferably training and/or updating of at least one model parameter of the selected model based on said (local) data at the client device. Possible training methods (e.g., a gradient descent optimization method) are basic knowledge of the skilled person. Additionally or alternatively, the training and/or updating of the selected model comprises determining, for the selected model, an updated gradient value of the model evaluation function; and sending, to the server device, the updated gradient value of the model evaluation function for the selected model, such that the server device determines an updated at least one model parameter of the selected model based on said updated gradient value.

At step S35: the client device sends, to the server device, information relating to the trained and/or updated selected model for the server device to further update the selected model. Said information comprises, as explained above for step S34, an updated value of at least one model parameter of the selected model and/or an updated gradient value of the model evaluation function for the selected model.

In addition, the proposed method is preferably performed for a plurality of iterations or rounds. For example, the client device is configured to perform the steps S31 to S35 in a current iteration, wherein said received plurality of models are updated by the server device in a previous iteration directly preceding the current iteration, wherein the client device is further configured to receive from the server device, in a next iteration directly following the current iteration, the plurality of models that are further updated by the server device in the current iteration, wherein the client device is further configured to repeat the steps S31 to S35 in the next iteration for the plurality of models. Hence, at the end of each round, updated models are provided for being further updated in the next round.

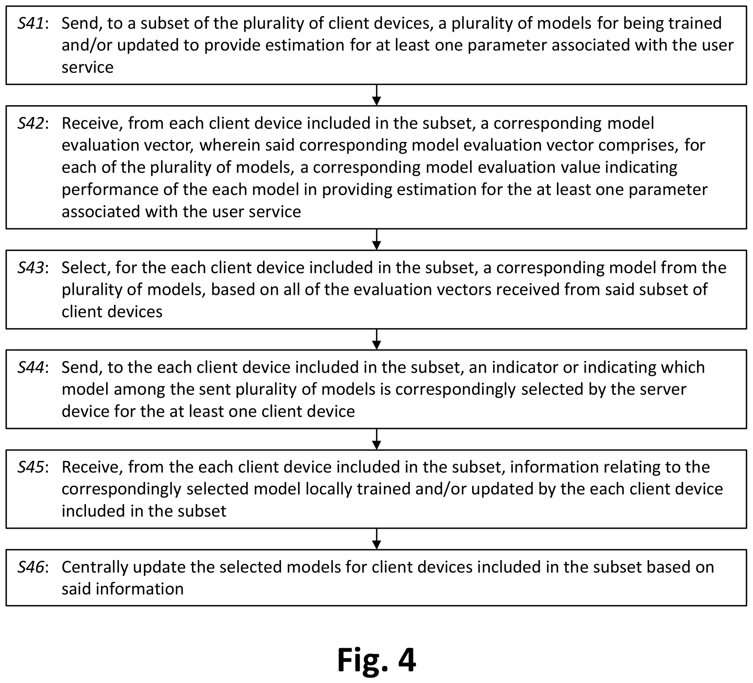

**Figure 4** schematically illustrates an example of an ML method applied to a server device in a distributed environment according to an example embodiment of the present disclosure. This distributed environment preferably comprises a plurality of client device and this server device. Accordingly, it is also provided a server device for performing such a method. In particular, the server device is configured to provide a user service and to establish communication with a server device for providing a Digital Twin Machine Learning, ML, Model training service for said client device. The Digital Twin ML Model training service refers to a service for training the ML model in the Digital Twin scenario. Similar aspects relating to the ML method as explained above for **Figure 3** are not repeated here, in particular as the server device in **Figure 4** and the client device in **Figure 3** interact in the distributed environment.

At Step S41: the server device sends, to a subset of the plurality of client devices, a plurality of models for being trained and/or updated to provide estimation for at least one parameter associated with the user service. The subset comprises at least one of the plurality of client devices. The selection of such a subset is not to be specifically limited, depending on the application scenario of the distributed environment, the type of the user service, the models to be trained and etc.

At Step S42: the server device receives, from each client device included in the subset, a corresponding model evaluation vector, wherein said corresponding model evaluation vector comprises, for each of the plurality of models, a corresponding model evaluation value indicating performance of the each model in providing estimation for the at least one parameter associated with the user service. In other words, each client device in the subset, for example following the method in **Figure 3,** provides the server device with a corresponding model evaluation vector comprising model evaluation values for the plurality of models.

At Step S43: the server device selects, for the each client device included in the subset, a corresponding model from the plurality of models, based on all of the evaluation vectors received from said subset of client devices. In other words, the server device selects, for each client device in the subset, a model from the plurality of models, based on evaluation values provided by all of the client devices in the subset.

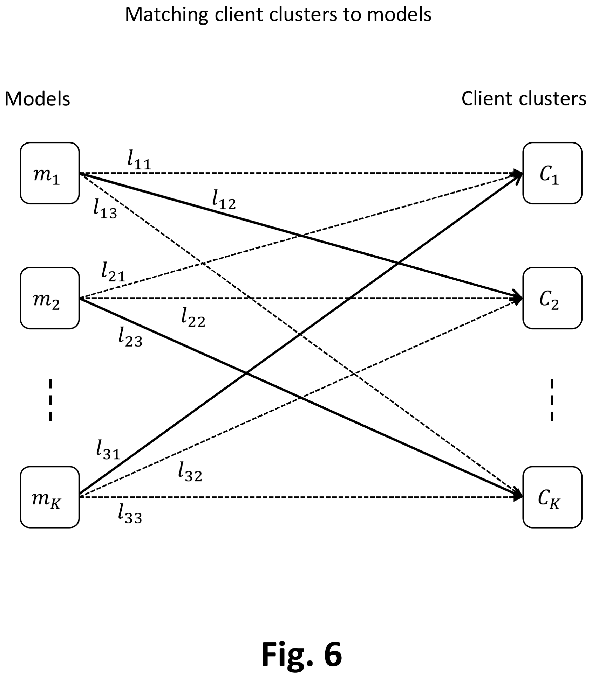

For example, the server device selects a corresponding model for the each client device included in the subset by: clustering the client devices included in the subset based on clustering, into a plurality of groups, all of the model evaluation vectors received from said subset of client devices, wherein each client device included in the subset is clustered into one group based on a vector clustering method; and selecting a corresponding model for each group. Therein, preferably, the selection is performed by: for each group, one-to-one matching the each group to a corresponding model based on a matching method (which will be explained with more details in **Figure 6).**

Indeed, the client devices belong to groups, but this information is unknown and unavailable to the server. It is through the proposed method of joint clustering and training that a grouping of client devices may be computed, which after a certain number of iterations ideally matches the true groups.

At Step S44: the server device sends, to the each client device included in the subset, an indicator for indicating which model among the sent plurality of models is correspondingly selected by the server device for the at least one client device.

At Step S45: the server device receives, from the each client device included in the subset, information relating to the correspondingly selected model locally trained and/or updated by the each client device included in the subset. The client devices locally trains and/or updates the selected model based on their respective local data and send the information relating to the trained and/or updated model to the server.

At Step S46: the server device centrally updates the selected models for client devices included in the subset based on said information. In the present disclosure, "central" steps refer to steps performed by the server device and "local" steps refer to steps performed by the client device(s). As the server device is in communication with all of the plurality of client devices, it has the overall view of the information sent from the plurality of client devices, whereas each client device has only access to its own local data and its locally provided further information relating to the updated and/or trained model(s).

Therein, the central updating at the server is preferably performed by: averaging, for each group, values included in said information, wherein preferably weights of the client devices in the each group in the averaging correspond to amounts of data at the client devices in the each group. As the server device has selected for each cluster/group of client devices a corresponding model, the averaging may be performed for a corresponding model for each cluster/group of client devices, in that for example updated values of at least one model parameter of the correspondingly selected model provided by client devices included in the each group are averaged. The averaging may additionally or alternatively be performed with respect to updated gradient values of the model evaluation function for the correspondingly selected model. The averaging may be more preferably a weighted averaging. In the implementation of weighted-averaging, preferably each client has communicated the size of its local dataset to the server before the beginning of the entire learning process, such that the server is informed of the amounts of data (points) at each client for determining the respective weight in the averaging process. The difference and similarity between applying model parameter or gradient value of the model evaluation function will be explained with more details in the following "Embodiment 2".

In addition, the method is preferably repeated in a plurality of iterations or rounds. More specifically, the server device is configured to perform the steps S41 to S46 in a current iteration, wherein said received plurality of models are updated by the server device in a previous iteration directly preceding the current iteration, wherein the server device is further configured to send to client devices included in another subset, in a next iteration directly following the current iteration, the plurality of models that are updated by the server device in the current iteration, wherein the server device is further configured to repeat the steps S41 to S46 in the next iteration for the plurality of models updated in the current iteration for the another subset of client devices.

Convergence criterion for stopping the iteration is twofold: convergence of the grouping of client devices that is computed at each round to a (stable) grouping (ideally the correct one), and also as low loss of the selected model of each client device (according to the grouping) on the client device's data.

More specifically, the iteration is configured to be stopped when the losses of the selected models for the corresponding client devices are lower than a pre-configured threshold, and the clustering or the clusters determined for the client devices have not been modified for a certain number of iterations and hence can be considered stable. The true grouping is initially unknown, and might (ideally) or might not be achieved. But as long as the method outputs a stable grouping for a number of rounds, this can be considered to be the final grouping.

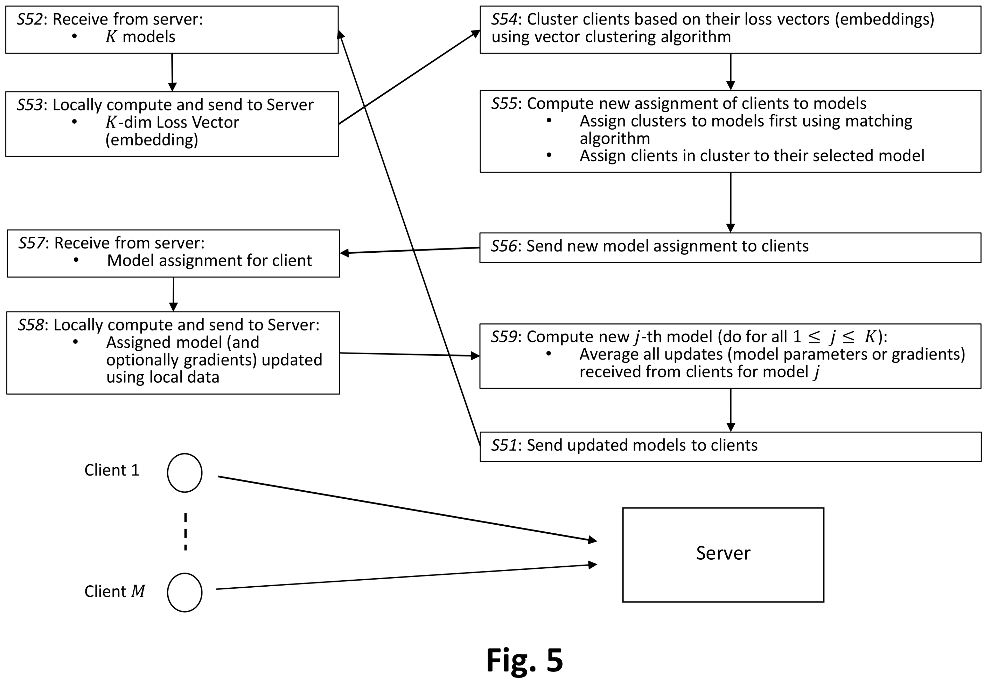

**Figure 5** schematically illustrates an example of an ML method applied to a distributed system according to an example embodiment of the present disclosure. The distributed system comprises a server device for example as provided with **Figure 4** and a plurality of client devices each for example as provided with **Figure 3.** Similar aspects relating to the ML method as explained above for Figures 3 and 4 are not repeated here.

An example application can be anomaly detection for digital twins or smart homes. The devices-clients here can be edge routers/firewalls of many factories or home routers of many homes and the server could be in edge cloud or in public cloud.

In particular, **Figure 5** shows an example of local model training and global clustering (at the server) using a clustering algorithm (e.g., k-means) on e.g., loss vectors.

As shown in **Figure 5,** clients locally build their embeddings in a privacy-preserving manner using their personal data. These embeddings serve as a measure of how close each client's data is to each of the K models and can be leveraged by the server to identify clients that own similar type of data. Clients also update the model assigned to them by the server using their local data and send their updated model (and, optionally, its gradients) to the server. The server clusters the client embeddings (e.g., using k-means) to help identify groups of similar clients. It then uniquely selects a model for all these similar clients belonging to one group. For this, the server computes a bipartite matching using a matching algorithm (e.g., min-cost matching with the cost being the total loss of each cluster/group). The server also applies the updates received from the clients to the different models and sends the new client-to-model assignments and the updated $K$ models back to all clients. This process is repeated until convergence of clients to models is achieved.

The method in **Figure 5** comprises the following steps:

At Step S51: The server device sends updated models to clients. As explained above, the method is performed preferably iteratively. Therefore, from the point of view of the current iteration, the models sent to client have been updated in a previous iteration directly preceding the current iteration.

At Step S52: The client devices receive from the server device: $K$ models. The number of models is not limited (i.e., may be randomly set), which can be any integer number starting from 1.

At Step S53: The client devices locally compute and send to the server device $K$-dim Loss Vectors (embedding). In particular, each client device has received the updated models and each client device accordingly sends to the service device a corresponding $K$-dim Loss Vector.

At Step S54: The server device clusters clients based on their loss vectors (embeddings) using a vector clustering algorithm. For the clustering method that the server uses to cluster the clients, one skilled in the art is aware of possible implementations, including one or more of the following non-limiting examples: k-means, DBSCAN, K-Medoid, Spectral Clustering, Gaussian Mixture model, and etc.

At Step S55: The server device computes new assignment of clients to models by: assigning clusters to models first using matching algorithm; and assigning clients in cluster to their selected model. The assignment or mapping of a cluster to a model will be explained with more details for **Figure 6.** The "new" assignment refers to that this assignment is provided in the current iteration, for replacing the previous assignment provided in the previous iteration directly preceding the current iteration.

At Step S56: The server device sends new model assignment, e.g., in the form of an indicator indicating which of the plurality of models is assigned to each client, to each client.

At Step S57: The client devices receive from the server device: respective model assignment for the client devices. As each client device is clustered to group and each group is matched to a model, each client device is assigned this matched model for the group the client device belongs to.

At Step S58: The client devices locally compute and send to the server device: assigned model (and optionally gradients) updated using local data.

At Step S59: The server device computes new $j$-th model (for all $1 \leq j \leq K$): and preferably averages all updates (model parameters or gradients) received from clients for model $j$.

**Figure 6** schematically illustrates an example of a matching method for assigning a cluster of clients to a corresponding model.

A matching is an assignment of each model to one and only one cluster, and of each cluster to one and only one model. In practice, for example a matching is a set of edges from models to clusters.

For example, one option is min-cost matching w.r.t. total cluster loss: one can define a matching's total loss (cost) to be the sum of the losses of the edges comprising the matching. Then, among all possible matchings, the one of the minimum loss (the solid line arrows in the example of **Figure 6**) is selected.

For matching clusters to models: alternatives can be to sort clusters w.r.t. minimum client ID, to do min-cost matching w.r.t. the total cluster loss, to do min-cost matching w.r.t. the cluster overlap with the previous clusters and etc.

The proposed method improves the state of the art in the following way:

- Many Personalized Federated Learning solutions require very good initializations of the models that they start with. Otherwise, they fail to find models that have low loss on clients' local data. This can be highly detrimental for Anomaly Detection with Digital Twins, as these models may fail to separate anomalies from normal operating conditions for the clients. The proposed solution on the other hand can work with even random model initializations. This is because even with randomly initialized models, the loss-based embeddings can be a good representation of clients' data.

- Many existing models like IFCA tend to map clients to models based only on a simple criterion (e.g., to the model with least loss on clients' data). This can lead to sub-optimal choices, as with such simple criteria many models may be equally qualified (e.g., all have almost equal loss) and therefore clients belonging to the same cluster may get assigned to different models even if their data differ only slightly. Such problems can compound over time, resulting in convergence to a sub-optimal solution. The proposed solution overcomes this issue, as it groups clients based on their embeddings (using clustering), which ensures that clients with similar data end up in the same group and hence get assigned to the same model.

- In the proposed solution, the probability of finding a good solution is high. That is because, even in the first round of our algorithm, there is a high probability that the clients' embeddings are a good representation of their local data and hence the clients get mapped correctly to the correct models in the next round. Because of this, in the subsequent rounds the embeddings only get better, thus improving the chance that an optimal solution will be found.

- The proposed solution also converges much faster to the final solution compared to the state of the art. This is because, even after just a few rounds, most clients get assigned correctly to their final model, leading to fast convergence after that.

- There is no prior work on an efficient Federated Learning-based anomaly detection solution for Digital Twins that is scalable, privacy preserving and that can operate in unsupervised settings common to Digital Twins where data labels are rarely available and data labeling can have high cost.

The proposed invention is particularly well-suited for e.g., anomaly detection in Digital Twins, where unsupervised machine learning is essential for comparing real-time data to a predefined baseline or expected behavior. Unlike existing federated learning approaches, which rely on supervised learning and require pre-labeled training data for both anomalies and normal behaviors, the proposed solution in accordance with the present disclosure offers a more flexible and effective approach for anomaly detection in complex systems. This is particularly valuable in environments where anomalies are constantly evolving, and historical data on previously seen anomalies is insufficient for detecting new, unknown anomalies. Furthermore, as the proposed solution is based on Federated Learning, it efficiently addresses the additional challenge of anomaly detection for Digital Twins, including scale and cost of processing large amounts of data, as well of preserving the privacy of local data.

In summary, the proposed joint clustering, federated learning, and embeddings generation approach offers a highly effective and novel solution for building personalized anomaly detection machine learning models. Its unique features, including minimal assumptions on the data distributions, embedding generation based on data characteristics, joint clustering and personalized model building, globally optimal clustering of clients based on their entire embeddings (loss/gradient vectors, in contrast to the more myopic local versions of prior work that only look at individual loss/gradient values) in a privacy preserving manner, and improved anomaly detection in an unsupervised setting, make it an ideal, flexible and scalable solution for complex systems, particularly in Digital Twins.

**Exemplary embodiments** implementing the above method according to the present disclosure:

Recall that the typical FL architecture consists of a server and a number of clients. Let $M$ be the number of clients, which belong to K clusters. Clients in each of the $K$ clusters draw data from a distinct data distribution $D_j$, $j \in$ [K] (where the notation $[K]$ denotes the set {1,2, ..., $K$}). Each client i $\in$ [M] has $n_i$ data points.

Let $f(\theta; z): \Theta \to \mathbb{R}$ be the loss function associated with data point z, where $\Theta \subseteq \mathbb{R}^d$ is the parameter space. The goal of the FL algorithm is to minimize the population loss function $F^i(\theta) \triangleq \mathbb{E}_{z \sim D_j}[f(\theta; z)]$ for all $j \in$ [K].

Let the empirical loss for the data $Z_i$ of client $i$ be defined as $F_i(\theta; Z_i) \triangleq \frac{1}{|Z_i|} \sum_{z \in Z_i} f(\theta; z)$.

The goal of our PFL algorithms is to simultaneously cluster the clients into K clusters and train K models, each of which each of which is best suited for the data of a single client cluster. Note that this assumes that the number of data classes (true clusters) is known (equal to K), and the number of models is picked to match it. However, the proposed method (e.g., implemented by algorithms below) does not necessarily need to know the number of data classes up front: if a number of models lower than the number of data classes is picked, then multiple similar data classes will be mapped to the same model; if a higher number is picked, then some data classes might be split in two. Therefore, the proposed method still works in a fully unsupervised setting with no upfront information on the number of true clusters.

*Embodiment 1: EFC, first variant - model averaging*

The pseudocode of a proposed Embeddings-driven Federated Clustering (EFC) algorithm is the following:

---

**Algorithm 1:** Embeddings-driven Federated Clustering (EFC) algorithm, model averaging version

---

**Input:** number of clients $M$, number of models $K$, number of data points $n_i$ for client $i$, $i \in [M]$

**Hyperparameters:** learning rate $\gamma$, number of parallel iterations $T$, number of local gradient steps $\tau$, vector clustering algorithm, matching algorithm

**Output:** final model parameters $\theta_j^{(T)}$, $j \in [K]$

---

1 Server: initialize model parameters $\theta_j^{(0)}$ for each of the $K$ models $j \in [K]$

2 **for** *round* $t = 0, 1, ..., T - 1$ **do**

3    $M^{(t)} \leftarrow$ random subset of clients

4    Server: broadcast model parameters $\theta_j^{(t)}$ of all $K$ models $j \in [K]$ to all clients in $M^{(t)}$

5    **for** *each client* $i \in M^{(t)}$ *in parallel* **do**

6      Run client $i$'s data through all $K$ models and get the losses
$$F_i^{(t)} \triangleq \left( F_i(\theta_j^{(t)}) \right), j \in [K]$$

7      Send loss vector $F_i^{(t)}$ to the server

8    Server (clustering step):

9    – Run vector clustering algorithm to group the set of vectors $\{F_i^{(t)}, i \in [M]\}$ into $K$ client clusters

10    – Map client clusters to models using matching algorithm and assign each client $i \in M^{(t)}$ to the corresponding model $c_i \equiv c_i^{(t)} \in [K]$ of its client cluster

11    **for** *each client* $i \in M^{(t)}$ *in parallel* **do**

12      Compute new model parameters $\widetilde{\theta}_i = \texttt{LocalUpdate}(i, \theta_{c_i}^{(t)}, \gamma, \tau)$ for model $c_i$ and send $c_i$ and $\widetilde{\theta}_i$ to the server

13    Server (averaging step):

14    – Clients that were assigned to model $j$ at round $t$: $C_j^{(t)} \triangleq \{i \in M^{(t)} \text{ s.t. } c_i^{(t)} = j\}$

15    – Model parameters update: $\forall j \in [K]$ s.t. $C_j^{(t)} \neq \emptyset$, $\theta_j^{(t+1)} = \dfrac{\sum_{i \in C_j^{(t)}} n_i \widetilde{\theta}_i}{\sum_{i \in C_j^{(t)}} n_i}$

16 return $\theta_j^{(T)}$

---

The method of Embodiment 1 (implemented by the above algorithm) operates as follows: Initially, the server creates K models (line 1), each of which will eventually trained to fit the data of each of the K clusters, and sends all of them to a subset (or all) of the M clients (lines 3-4). Each of these clients runs its data through all K models and gets the losses, which form one loss vector of length K per client. These loss vectors are then sent to the server (lines 5-7). The server treats the loss vectors as data points and runs a vector clustering algorithm (e.g., k-means, DBSCAN, K-Medoid, Spectral Clustering, Gaussian Mixture model, etc.) on them in order to cluster them into K groups (line 9) using a minimum-cost matching algorithm: a bipartite graph is created, with the nodes being the groups on the left and the models on the right, and the weight of each edge being the sum of the losses of the clients in the group on the left on the model on the right. On this graph, the minimum cost bipartite matching using standard methods (e.g., max-flow-based) can be found. Alternatives can be to sort clusters w.r.t. minimum client ID, to do min-cost matching w.r.t. the total cluster loss, to do min-cost matching w.r.t. the cluster overlap with the previous clusters, etc. Thus, after this step, each client (represented by its corresponding loss vector) is assigned to a certain cluster $c_i$ for that iteration (line 10). Note that there is a 1-to-1 mapping between clusters and models, so effectively each client is assigned to a particular model for that iteration. After this assignment, each client trains its assigned model on its private data (lines 11-12) by running locally $\tau$ steps of a gradient descent optimization algorithm denoted by the function LocalUpdate() (e.g., Stochastic Gradient Descent - SGD, Adaptive Moment Estimation - Adam, etc.) starting with model $c_i$'s parameters, and sends the resulting model parameters to the server. Then, the averaging step follows: the server aggregates all the received model parameters for each model j from the set $C_j^{(t)}$ of clients that updated it, using a weighted average of their model parameters, where each client i's contribution is normalized by its number of samples $n_i$ (lines 13-15). In the next iteration, the server sends the computed updated parameters once again to the clients (line 4), and the process continues until eventually arriving at some parameters for each model that lead to a "good" clustering of the clients (ideally, matching the true one).

EFC (Embodiment 1 implemented e.g. by Alg. 1) differs from IFCA (see [4]) in the following ways. First, the cluster/model choice for each client in IFCA happens locally at the client by choosing the model with the lowest loss for that client, while in Embodiment 1 the client-to-cluster (client-to-model) assignment happens centrally on the server using k-means on the set of loss vectors of all clients. Second, in the averaging phase, Embodiment 1 uses explicitly the number of data points each client holds to ensure fair treatment in the averaging, similarly as in [8], while IFCA assumes from the beginning that all clients hold the same amount of data and treats them as equals, which may not be the case in practice.

In IFCA, the client selects the model with the lowest loss. In Embodiment 1, the client evaluates all the models, sends the loss vector to the server, the server clusters the loss vectors (embeddings) and assigns the client to a model based on this clustering.

Note that the proposed method in Embodiment 1 is a generalization of the original FL algorithm [1]. In the original FL algorithm, there is a single model being trained by all clients. If we set K = 1 in our algorithm, then lines 5-10 become trivial, all clients train the same model in lines 11-12 and the server aggregates the updated parameters from all clients together in lines 13-15.

_Embodiment 2: EFC, second variant - gradient averaging_

Another variant of EFC algorithm emerges when replacing model averaging with gradient averaging. The corresponding pseudocode may be as shown in Alg. 2.

---

**Algorithm 2:** Embeddings-driven Federated Clustering (EFC) algorithm, gradient averaging version

---

**Input:** number of clients $M$, number of models $K$, number of data points $n_i$ for client $i$, $i \in [M]$

**Hyperparameters:** learning rate $\gamma$, number of parallel iterations $T$, vector clustering algorithm, matching algorithm

**Output:** final model parameters $\theta_j^{(T)}$, $j \in [K]$

1   Server: initialize model parameters $\theta_j^{(0)}$ for each of the $K$ models $j \in [K]$

2   **for** *round* $t = 0, 1, ..., T-1$ **do**

3     $M^{(t)} \leftarrow$ random subset of clients

4     Server: broadcast model parameters $\theta_j^{(t)}$ of all $K$ models $j \in [K]$ to all clients in $M^{(t)}$

5     **for** *each client* $i \in M^{(t)}$ *in parallel* **do**

6       Run client $i$'s data through all $K$ models and get the losses
$$F_i^{(t)} \triangleq \left( F_i(\theta_j^{(t)}) \right), j \in [K]$$

7       Send loss vector $F_i^{(t)}$ to the server

8     Server (clustering step):

9     $-$ Run vector clustering algorithm to group the set of vectors $\{F_i^{(t)}, i \in [M]\}$ into $K$ client clusters

10     $-$ Map client clusters to models using matching algorithm and assign each client $i \in M^{(t)}$ to the corresponding model $c_i \equiv c_i^{(t)} \in [K]$ of its client cluster

11     **for** *each client* $i \in M^{(t)}$ *in parallel* **do**

12       Compute stochastic gradient $g_i = \hat{\nabla} F_i(\theta_{c_i}^{(t)})$ using $c_i$'s model and send $c_i$ and $g_i$ to the server

13     Server (averaging step):

14     $-$ Clients that were assigned to model $j$ at round $t$: $C_j^{(t)} \triangleq \{i \in M^{(t)} \text{ s.t. } c_i^{(t)} = j\}$

15     $-$ Model parameters update: $\forall j \in [K]$ s.t. $C_j^{(t)} \neq \emptyset$, $\theta_j^{(t+1)} = \theta_j^{(t)} - \gamma \dfrac{\sum_{i \in C_j^{(t)}} n_i g_i}{\sum_{i \in C_j^{(t)}} n_i}$

16   return $\theta_j^{(T)}$

---

In this procedure in Embodiment 2, the difference from model averaging in Embodiment 1 is that the order of taking a gradient step and of averaging has been reversed. Now in Embodiment 2, each client computes the gradient of the loss function with respect to its assigned model by the server ($c_j$) (line 12) and sends the gradient to the server. Then the server takes a weighted average of the gradients, where each client i's gradient is normalized by its number of samples $n_j$, and subtracts the aggregated gradient multiplied by the learning rate from the previous parameters, to get the new parameters (line 15). In the experiments, both the model averaging and the gradient averaging versions were tested and they both worked equally well.

Embodiments 1 and 2 are able to cluster the clients in this unsupervised setting much better than IFCA. The reason is that at each round, IFCA assigns each client to the model for which it has the lowest loss among all models. However, in some iteration where losses of a client across models are similar (as e.g. happens in the initial iteration when no training has taken place yet), this assignment can be problematic, as many or all of the clients might get assigned to the wrong single model that exhibits the lowest loss (the client's particular data does not play a significant part as the models are untrained). This would be fine if the correct clustering would be recovered in subsequent iterations. However, when many clients from different clusters are assigned to a single model, the model will get trained on all their data, so in the next round there is high chance that the same model will exhibit the lowest loss for the same clients again. This leads in a vicious cycle, where these clients are trapped in the same k-means cluster and are not able to get separated. With the proposed in Embodiments 1 and 2 (e.g., implemented by EFC Algorithms 1 and 2) however, this does not happen: clustering at each round is done based on the entire loss vectors of the clients, and not on the single lowest value of the loss vector. The vector clustering algorithm detects the similarities between loss vectors of different clients and clusters them in the same cluster. Note that clusters that belong to the same true cluster are highly likely to end up in the same client cluster (as output by the vector clustering algorithm), as their fingerprints (their losses on all models) will be similar. This is the intuition why the proposed Embodiments 1 and 2 are able to cluster correctly in cases where IFCA cannot.

*Embodiment 3: PFC, first variant - model averaging*

It is addressed a potential scalability issue by modifying the proposed method to use probabilistic assignment of clients to clusters when the number of clients is very large. Clustering is an NP-hard problem, so no polynomial-time algorithm exists. This might make the complexity of our algorithms high when applied to a large number of clients. Of course, the sampling step (e.g., line 3 in Algs. 1 and 2) is helpful, as not all clients should necessarily participate at each round. However, in cases where avoiding centralized clustering is desirable for either complexity or decentralization reasons, the following Embodiment 3 constitutes an improvement over IFCA with still only local cluster assignment decided upon by each client and not by the server.

---

**Algorithm 3:** Probabilistic Federated Clustering (PFC) algorithm, model averaging version

---

**Input:** number of clients $M$, number of models $K$, number of data points $n_i$ for client $i$, $i \in [M]$

**Hyperparameters:** learning rate $\gamma$, number of parallel iterations $T$, number of local gradient steps $\tau$, probability distribution function $q$

**Output:** final model parameters $\theta_j^{(T)}$, $j \in [K]$

---

1 Server: initialize model parameters $\theta_j^{(0)}$ for each of the $K$ models $j \in [K]$

2 **for** *round* $t = 0, 1, ..., T - 1$ **do**

3 $\quad$ $M^{(t)} \leftarrow$ random subset of clients

4 $\quad$ Server: broadcast model parameters $\theta_j^{(t)}$ of all $K$ models $j \in [K]$ to all clients in $M^{(t)}$

5 $\quad$ **for** *each client* $i \in M^{(t)}$ *in parallel* **do**

6 $\quad\quad$ Run client $i$'s data through all $K$ models and get the losses
$$F_i^{(t)} \triangleq \left( F_i(\theta_j^{(t)}) \right), j \in [K]$$

7 $\quad$ Clustering step:

8 $\quad$ **for** *each client* $i \in M^{(t)}$ *in parallel* **do**

9 $\quad\quad$ Define probabilities of assignment of client $i$ to client cluster $j$:
$$\pi_{ij} \triangleq q\left( 1/F_i(\theta_j^{(t)}) \right), j \in [K]$$

10 $\quad\quad$ Select at random a model (equiv., client cluster) $c_i \equiv c_i^{(t)} \in [K]$ according to the probabilities $\pi_{ij}, j \in [K]$

11 $\quad$ **for** *each client* $i \in M^{(t)}$ *in parallel* **do**

12 $\quad\quad$ Compute new model parameters $\widetilde{\theta}_i = \texttt{LocalUpdate}(i, \theta_{c_i}^{(t)}, \gamma, \tau)$ for model $c_i$ and send $c_i$ and $\widetilde{\theta}_i$ to the server

13 $\quad$ Server (averaging step):

14 $\quad$ – Clients that were assigned to model $j$ at round $t$: $C_j^{(t)} \triangleq \{ i \in M^{(t)} \text{ s.t. } c_i^{(t)} = j \}$

15 $\quad$ – Model parameters update: $\forall j \in [K]$ s.t. $C_j^{(t)} \neq \emptyset$, $\theta_j^{(t+1)} = \dfrac{\sum_{i \in C_j^{(t)}} n_i \widetilde{\theta}_i}{\sum_{i \in C_j^{(t)}} n_i}$

16 return $\theta_j^{(T)}$

---

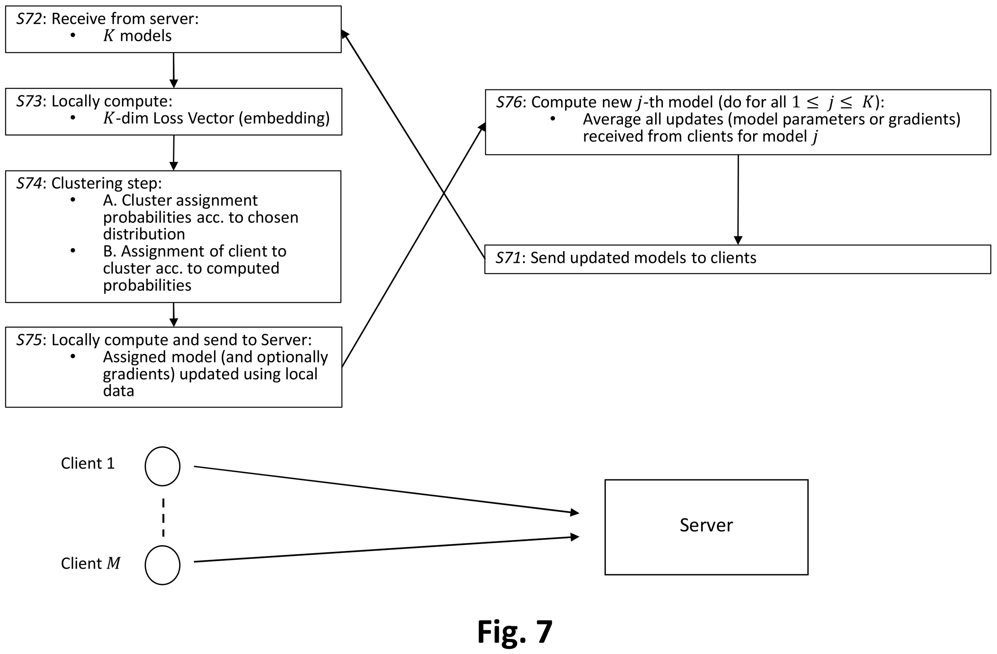

The above explanation relating to Embodiment 3 provides (as shown in Alg. 3) the (first) model averaging version of the proposed Probabilistic Federated Clustering (PFC) method. The second variant that uses gradient averaging can be readily derived by substituting lines 12 and 15 with lines 12 and 15 of Alg. 2. Therefore, the second variant of Embodiment PFC is not explained with more details here. In particular, Figure 7 shows local model training and local clustering (at each client) using a chosen distribution on losses (e.g., softmax).

Embodiment 3 (e.g., implemented by the PFC algorithm in Alg. 3) works as follows. Again, the server initializes K models, selects a subset of clients and sends the model parameters to them (lines 1-4). Each client again runs its data through all models to get the loss vector (lines 5-6). Then, the local clustering step follows (lines 7-10): each client defines the preference probabilities for selecting each model based on the model losses using the predefined distribution (through its probability density function $q$ - line 9), and based on those probabilities it randomly selects a cluster and the corresponding model that it will update at that round (line 10). The training happens as before (lines 11-12), the model parameters of each client are sent to the server and the server aggregates them (lines 13-15).

The probability density function q can e.g. be the softmax function, or any function inversely proportional to the (absolute value of the) loss (the higher the absolute loss, the lower the probability), for example proportional to -|loss| or 1/| loss|, with values normalized to sum to 1.

The core idea of Embodiment 3 is that the randomness in the selection of the model each client will train, as opposed to deterministically selecting the model with the lowest loss, can to some extent help clients from different clusters avoid being stuck with the same model for multiple rounds, and get separated more easily.

In IFCA, the client selects the model with the lowest loss. In the Embodiment 3, the client selects the model randomly among all models according to a probability distribution defined according to the losses.

As shown in **Figure** 7, the method comprises more specifically the following steps:

At Step S71: the server sends updated models to clients.

At Step S72: the clients receive from server: K models.

At Step S73: the clients locally compute: K-dim Loss Vectors (embeddings).

At Step S74: Clustering step at the clients:

A. Cluster assignment probabilities acc. to chosen distribution;
B. Assignment of client to cluster acc. to computed probabilities.

At Step S75: the clients locally compute and send to server: Assigned model (and optionally gradients) updated using local data.

At Step S76: the server computes new j-th model (for all $1 \leq j \leq K$): preferably averages all updates (model parameters or gradients) received from clients for model j.

In the above Embodiment 3, local clustering by the clients based on model selection preference probabilities is provided, wherein the clients select a model based on said probabilities. This embodiment therefore relates to the local variant of the probabilistic version. Namely that the model selection preference probabilities are determined locally by the clients and are then applied locally by the clients to select a corresponding model.

Further, according to the present disclosure, alternatively or additionally, a central variant of the probabilistic version is provided, wherein the server makes the decision on which model to select for the respective client. In this central variant, for the server to determine a selected model, the local model selection preference probabilities determined by the clients are transmitted to the server for the server to select a model based on those probabilities computed by clients (as also explained above for the possible implementations of step S33).

For both EFC and PFC procedures, once the training is completed according to the above-described procedures, inference is straightforward and happens as shown in **Error! Reference source not found.Error! Reference source not found..**

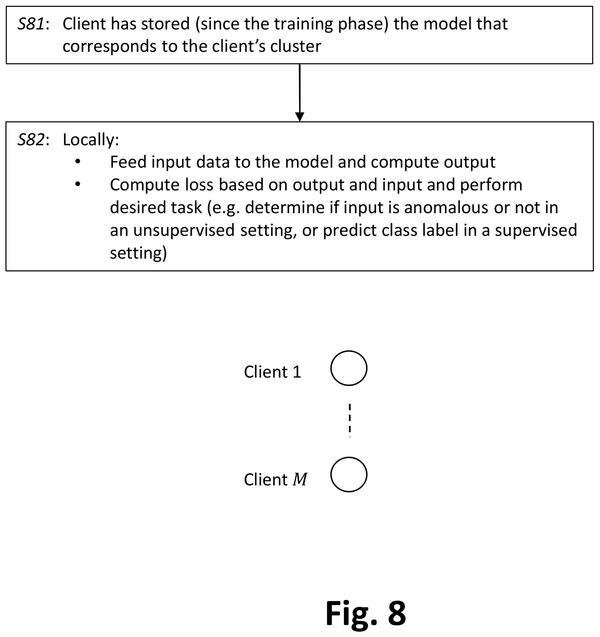

The procedure according to **Figure** 8 comprises the following steps at each client device:

At step S81: Client has stored (since the training phase) the model that corresponds to the client's cluster; and

At step S82: Locally, client feeds input data to the model and computes output; and computes loss based on output and input and perform desired task (e.g., determine if input is anomalous or not in an unsupervised setting, or predict class label in a supervised setting).

It is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

According to some example embodiments, there are also provided corresponding methods suitable to be carried out by the apparatuses (network elements/components) as described above, such as the UE, the CU, the DU, etc.

It should nevertheless be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the CU, the DU, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the CU, the DU, etc., as described above) that comprises respective means configured to at least perform the respective steps as described above.

It is to be noted that examples of embodiments of the disclosure are applicable to various different network configurations. In other words, the examples shown in the above-described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

**List of abbreviations:**

DT: Digital Twin
ML: Machine Learning
FL: Federated Learning
PFL: Personalized Federated Learning
IFCA: Iterated Federated Clustering Algorithm
i.i.d.: independent and identically distributed
EFC: Embeddings-driven Federated Clustering
PFC: Probabilistic Federated Clustering

**References**

[1] B. McMahan, E. Moore, D. Ramage, S. Hampson, and B. A. y Arcas, "Communication-Efficient Learning of Deep Networks from Decentralized Data", in Proceedings of the 20th International Conference on Artificial Intelligence and Statistics, A. Singh and J. Zhu, Eds., in Proceedings of Machine Learning Research, vol. 54. PMLR, Apr. 2017, pp. 1273-1282. [Online]. Available: https://proceedings.mlr.press/v54/memahan17a.html

[2] A. Z. Tan, H. Yu, L. Cui, and Q. Yang, "Towards Personalized Federated Learning", IEEE Transactions on Neural Networks and Learning Systems, vol. 34, no. 12, pp. 9587-9603, Dec. 2023, doi: 10.1109/TNNLS.2022.3160699.

[3] Y. Mansour, M. Mohri, J. Ro, and A. T. Suresh, "Three Approaches for Personalization with Applications to Federated Learning", Jul. 19, 2020, arXiv: arXiv:2002.10619. Accessed: Mar. 07, 2023. [Online]. Available: http://arxiv.org/abs/2002.10619

[4] A. Ghosh, J. Chung, D. Yin, and K. Ramchandran, "An Efficient Framework for Clustered Federated Learning", IEEE Trans. Inform. Theory, vol. 68, no. 12, pp. 8076-8091, Dec. 2022, doi: 10.1109/TIT.2022.3192506.

[5] M. Werner, L. He, M. Jordan, M. Jaggi, and S. P. Karimireddy, "Provably Personalized and Robust Federated Learning", Transactions on Machine Learning Research, Aug. 2023, Accessed: Mar. 29, 2024. [Online]. Available:

https://openreview.net/forum?id=B0uBSSUy0G

[6] D. K. Dennis, T. Li, and V. Smith, "Heterogeneity for the Win: One-Shot Federated Clustering", in Proceedings of the 38th International Conference on Machine Learning, PMLR, Jul. 2021, pp. 2611-2620. Accessed: May 07, 2024. [Online]. Available: https://proceedings.mlr.press/v139/dennis21a.html

[7] F. Sattler, K.-R. Müller, and W. Samek, "Clustered Federated Learning: Model-Agnostic Distributed Multitask Optimization Under Privacy Constraints", IEEE Transactions on Neural Networks and Learning Systems, vol. 32, no. 8, pp. 3710-3722, Aug. 2021, doi: 10.1109/TNNLS.2020.3015958.

[8] J. Chung, K. Lee, and K. Ramchandran, "Federated Unsupervised Clustering with Generative Models", presented at the AAAI 2022 international workshop on trustable, verifiable and auditable federated learning, 2022.

[9] Y. Lecun, L. Bottou, Y. Bengio, and P. Haffner, "Gradient-based Learning Applied to Document Recognition", Proceedings of the IEEE, vol. 86, no. 11, pp. 2278-2324, Nov. 1998, doi: 10.1109/5.726791.

[10] Q. Lu, X. Xie, A. K. Parlikad, and J. M. Schooling, "Digital Twin-enabled Anomaly Detection for Built Asset Monitoring in Operation and Maintenance", Automation in Construction, vol. 118, p. 103277, Oct. 2020, doi: 10.1016/j.autcon.2020.103277.

[11] Q. Xu, S. Ali, and T. Yue, "Digital Twin-based Anomaly Detection in Cyber-physical Systems", in 2021 14th IEEE Conference on Software Testing, Verification and Validation (ICST), Apr. 2021, pp. 205-216. doi: 10.1109/ICST49551.2021.00031.

[12] H. Huang, L. Yang, Y. Wang, X. Xu, and Y. Lu, "Digital Twin-driven Online Anomaly Detection for an Automation System based on Edge Intelligence", Journal of Manufacturing Systems, vol. 59, pp. 138-150, Apr. 2021, doi: 10.1016/j.jmsy.2021.02.010.

[13] US 2023/0419123 A1.

**Claims**

1. A client device, configured to provide a user service and to establish communication with a server device for providing a Digital Twin Machine Learning, ML, Model training service for said client device, comprising:

    at least one processor, and
    at least one memory storing instructions that, when executed by the at least one processor, cause the client device at least to:

       receive, from the server device, a plurality of models for providing estimation for at least one parameter associated with the user service;
       apply, for each of the received plurality of models, data at the client device associated with the user service to a model evaluation function, and determine, for the each model, a corresponding model evaluation value for indicating performance of the each model in providing estimation for said at least one parameter associated with the user service;
       obtain, from the server device, an indicator for indicating a model selected by the server device for the client device among the received plurality of models based on all of the determined model evaluation values for the received plurality of models;
       train and/or update the selected model based on said data at the client device associated with the user service; and
       send, to the server device, information relating to the trained and/or updated selected model for the server device to further update the selected model.

2. The client device according to claim 1, wherein the client device is further configured to obtain a selected model by:

    sending, to the server device, a model evaluation vector comprising the plurality of determined model evaluation values for the received plurality of models; and
    receiving, from the server device, an indicator for indicating a model selected by the server device among the received plurality of models for the client device based on the model evaluation vector.

3. The client device according to claim 2, wherein the client device is further configured to obtain a selected model by:

    determining, for the each model, a corresponding model selection preference probability of selecting the each model, wherein the corresponding model selection preference probability is determined based on applying a pre-configured probability density function to the determined model evaluation value for the each model;

wherein the model evaluation vector further comprises model selection preference probabilities determined for the plurality of models, for the server device to select one of the plurality of models; and
receiving, from the server device, the selected model.

4. The client device according to any one of claims 1 to 3, wherein the client device is further configured to train and/or update the selected model by:

updating a value of at least one model parameter of the selected model based on said data at the client device; and
sending, to the server device, the updated value of the at least one model parameter of the selected model.

5. The client device according to any one of claims 1 to 4, wherein the client device is further configured to train the selected model by a gradient descent optimization method.

6. The client device according to any one of claims 1 to 5, wherein the client device is further configured to train and/or update the selected model by:

determining, for the selected model, an updated gradient value of the model evaluation function; and
sending, to the server device, the updated gradient value of the model evaluation function for the selected model.

7. The client device according to any one of claims 1 to 6, wherein the client device is configured to perform the steps according to any one of claims 1 to 6 in a current iteration,

wherein said received plurality of models are updated by the server device in a previous iteration directly preceding the current iteration,
wherein the client device is further configured to receive from the server device, in a next iteration directly following the current iteration, the plurality of models that are further updated by the server device in the current iteration,
wherein the client device is further configured to repeat the steps according to any one of claims 1 to 6 in the next iteration for the plurality of models.

8. The client device according to any one of claims 1 to 7, wherein the model evaluation function is a loss function indicating a loss when applying a model to provide estimation for the at least one parameter associated with the user service.

9. The client device according to claim 8 when depending on claim 3, wherein for a model, a smaller loss value given by the loss function indicates a higher value of a model selection preference probability given by the pre-configured probability density function.

10. A server device, configured to establish communication with a plurality of client devices for providing a Digital Twin Machine Learning, ML, Model training service for the plurality of client devices, comprising:

at least one processor, and
at least one memory storing instructions that, when executed by the at least one processor, cause the server device at least to:

send, to a subset of the plurality of client devices, a plurality of models for being trained and/or updated to provide estimation for at least one parameter associated with the user service,
receive, from each client device included in the subset, a corresponding model evaluation vector, wherein said corresponding model evaluation vector comprises, for each of the plurality of models, a corresponding model evaluation value indicating performance of the each model in providing estimation for the at least one parameter associated with the user service;
select, for the each client device included in the subset, a corresponding model from the plurality of models, based on all of the evaluation vectors received from said subset of client devices;
send, to the each client device included in the subset, an indicator for indicating which model among the sent plurality of models is correspondingly selected by the server device for the at least one client device;
receive, from the each client device included in the subset, information relating to the correspondingly selected model locally trained and/or updated by the each client device included in the subset; and
centrally update the selected models for client devices included in the subset based on said information.

11. The server device according to claim 10, wherein the server device is further configured to select a corresponding model for the each client device included in the subset by:

clustering the client devices included in the subset based on clustering, into a plurality of groups, all of the model evaluation vectors received from said subset of client devices, wherein each client device included in the subset is clustered into one group based on a vector clustering method; and
selecting a corresponding model for each group.

12. The server device according to claim 11, wherein the server device is further configured to select for each group a corresponding model by one-to-one matching the each group to a corresponding model based on a matching method.

13. The server device according to any one of claims 10 to 12, wherein said information comprises a value of at least one model parameter and/or a gradient value of the model evaluation function.

14. The server device according to claim 13, wherein the server device is further configured to centrally update the selected models for the client devices included in the subset by:
averaging, for each group, values included in said information, wherein preferably weights of the client devices in the each group in the averaging correspond to amounts of data at the client devices in the each group.

15. The server device according to claim 13 or claim 14, wherein the server device is further configured to:
determine an updated value of at least one model parameter of the correspondingly selected model based on an updated gradient value of the model evaluation function for the correspondingly selected model.

Typical FL architecture

Fig. 1

Typical personalized FL architecture

Fig. 2

EP 4 779 526 A1

S31: Receive, from the server device, a plurality of models for providing estimation for at least one parameter associated with the user service

S32: Apply, for each of the received plurality of models, data at the client device associated with the user service to a model evaluation function, and determine, for the each model, a corresponding model evaluation value for indicating performance of the each model in providing estimation for said at least one parameter associated with the user service

S33: Obtain, from the server device, an indicator for indicating a model selected by the server device for the client device among the received plurality of models based on all of the determined model evaluation values for the received plurality of models

S34: Train and/or update the selected model based on said data at the client device associated with the user service

S35: Send, to the server device, information relating to the trained and/or updated selected model for the server device to further update the selected model

# Fig. 3

S41: Send, to a subset of the plurality of client devices, a plurality of models for being trained and/or updated to provide estimation for at least one parameter associated with the user service

↓

S42: Receive, from each client device included in the subset, a corresponding model evaluation vector, wherein said corresponding model evaluation vector comprises, for each of the plurality of models, a corresponding model evaluation value indicating performance of the each model in providing estimation for the at least one parameter associated with the user service

↓

S43: Select, for the each client device included in the subset, a corresponding model from the plurality of models, based on all of the evaluation vectors received from said subset of client devices

↓

S44: Send, to the each client device included in the subset, an indicator or indicating which model among the sent plurality of models is correspondingly selected by the server device for the at least one client device

↓

S45: Receive, from the each client device included in the subset, information relating to the correspondingly selected model locally trained and/or updated by the each client device included in the subset

↓

S46: Centrally update the selected models for client devices included in the subset based on said information

# Fig. 4

**S52**: Receive from server:
- $K$ models

**S53**: Locally compute and send to Server
- $K$-dim Loss Vector (embedding)

**S57**: Receive from server:
- Model assignment for client

**S58**: Locally compute and send to Server:
- Assigned model (and optionally gradients) updated using local data

**S54**: Cluster clients based on their loss vectors (embeddings) using vector clustering algorithm

**S55**: Compute new assignment of clients to models
- Assign clusters to models first using matching algorithm
- Assign clients in cluster to their selected model

**S56**: Send new model assignment to clients

**S59**: Compute new $j$-th model (do for all $1 \leq j \leq K$):
- Average all updates (model parameters or gradients) received from clients for model $j$

**S51**: Send updated models to clients

Client 1

Client $M$

Server

**Fig. 5**

EP 4 779 526 A1

Matching client clusters to models

Client clusters

Models

$C_1$  $C_2$  $C_K$

$m_1$  $m_2$  $m_K$

$l_{11}$  $l_{12}$  $l_{13}$  $l_{21}$  $l_{22}$  $l_{23}$  $l_{31}$  $l_{32}$  $l_{33}$

**Fig. 6**

EP 4 779 526 A1

$S72$: Receive from server:
- $K$ models

$S73$: Locally compute:
- $K$-dim Loss Vector (embedding)

$S74$: Clustering step:
- A. Cluster assignment probabilities acc. to chosen distribution
- B. Assignment of client to cluster acc. to computed probabilities

$S75$: Locally compute and send to Server:
- Assigned model (and optionally gradients) updated using local data

$S76$: Compute new $j$-th model (do for all $1 \leq j \leq K$):
- Average all updates (model parameters or gradients) received from clients for model $j$

$S71$: Send updated models to clients

Client 1

Client $M$

Server

**Fig. 7**

S81: Client has stored (since the training phase) the model that corresponds to the client's cluster

S82: Locally:
- Feed input data to the model and compute output
- Compute loss based on output and input and perform desired task (e.g. determine if input is anomalous or not in an unsupervised setting, or predict class label in a supervised setting)

Client 1 ◯

Client $M$ ◯

**Fig. 8**

# EP 4 779 526 A1

**EUROPEAN SEARCH REPORT**

Application Number

EP 25 22 7733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 116 187 430 A (HUAWEI TECH CO LTD) 30 May 2023 (2023-05-30) * abstract * * paragraph [0001] - paragraph [0332]; claims 1-25 * | 1-15 | INV. G06N3/098 G06N20/00 |
| A | LONG GUODONG ET AL: "Multi-center federated learning: clients clustering for better personalization", ARXIV.ORG, [Online] vol. 26, no. 1, 9 June 2022 (2022-06-09), pages 481-500, XP093034696, NL ISSN: 1386-145X, DOI: 10.1007/s11280-022-01046-x Retrieved from the Internet: URL:https://link.springer.com/article/10.1007/s11280-022-01046-x/fulltext.html> [retrieved on 2026-04-20] * the whole document * | 1-15 | |

TECHNICAL FIELDS
SEARCHED (IPC)

G06N

The present search report has been drawn up for all claims

| Place of search | Date of completion of the search | Examiner |
|---|---|---|
| The Hague | 22 April 2026 | Tsakonas, Athanasios |

EPO FORM 1503 03.82 (P04C01)

## ANNEX TO THE EUROPEAN SEARCH REPORT
## ON EUROPEAN PATENT APPLICATION NO.

EP 25 22 7733

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2026

| Patent document cited in search report | | Publication date | Patent family member(s) | | Publication date |
|---|---|---|---|---|---|
| CN 116187430 | A | 30-05-2023 | CN | 116187430 A | 30-05-2023 |
| | | | EP | 4654088 A1 | 26-11-2025 |
| | | | US | 2025356213 A1 | 20-11-2025 |
| | | | WO | 2024160216 A1 | 08-08-2024 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20230419123 A1

**Non-patent literature cited in the description**

- *3GPP TS 38.300 V16.6.0*, June 2021
- *3GPP TS 38.401 V16.6.0*, July 2021
- *3GPP TR 38.801 V14.0.0*, March 2017
- *3GPP TS 38.331 V16.5.0*, June 2021
- **B. MCMAHAN** ; **E. MOORE** ; **D. RAMAGE** ; **S. HAMPSON** ; **B. A. Y ARCAS**. Communication-Efficient Learning of Deep Networks from Decentralized Data. *Proceedings of the 20th International Conference on Artificial Intelligence and Statistics*
- Proceedings of Machine Learning Research. PMLR, April 2017, vol. 54, 1273-1282
- **A. Z. TAN** ; **H. YU** ; **L. CUI** ; **Q. YANG**. Towards Personalized Federated Learning. *IEEE Transactions on Neural Networks and Learning Systems*, December 2023, vol. 34 (12), 9587-9603
- **Y. MANSOUR** ; **M. MOHRI** ; **J. RO** ; **A. T. SURESH**. Three Approaches for Personalization with Applications to Federated Learning. *arXiv: arXiv:2002.10619*, 19 July 2020, http://arxiv.org/abs/2002.10619
- **A. GHOSH** ; **J. CHUNG** ; **D. YIN** ; **K. RAMCHANDRAN**. An Efficient Framework for Clustered Federated Learning. *IEEE Trans. Inform. Theory*, December 2022, vol. 68 (12), 8076-8091
- **M. WERNER** ; **L. HE** ; **M. JORDAN** ; **M. JAGGI** ; **S. P. KARIMIREDDY**. Provably Personalized and Robust Federated Learning. *Transactions on Machine Learning Research*, August 2023, https://openreview.net/forum?id=B0uBSSUy0G

- Heterogeneity for the Win: One-Shot Federated Clustering. **D. K. DENNIS** ; **T. LI** ; **V. SMITH**. Proceedings of the 38th International Conference on Machine Learning. PMLR, July 2021, 2611-2620
- **F. SATTLER** ; **K.-R. MÜLLER** ; **W. SAMEK**. Clustered Federated Learning: Model-Agnostic Distributed Multitask Optimization Under Privacy Constraints. *IEEE Transactions on Neural Networks and Learning Systems*, August 2021, vol. 32 (8), 3710-3722
- **J. CHUNG** ; **K. LEE** ; **K. RAMCHANDRAN**. Federated Unsupervised Clustering with Generative Models. *AAAI 2022 international workshop on trustable, verifiable and auditable federated learning*, 2022
- **Y. LECUN** ; **L. BOTTOU** ; **Y. BENGIO** ; **P. HAFFNER**. Gradient-based Learning Applied to Document Recognition. *Proceedings of the IEEE*, November 1998, vol. 86 (11), 2278-2324
- **Q. LU** ; **X. XIE** ; **A. K. PARLIKAD** ; **J. M. SCHOOLING**. Digital Twin-enabled Anomaly Detection for Built Asset Monitoring in Operation and Maintenance. *Automation in Construction*, October 2020, vol. 118, 103277
- **Q. XU** ; **S. ALI** ; **T. YUE**. Digital Twin-based Anomaly Detection in Cyber-physical Systems. *2021 14th IEEE Conference on Software Testing, Verification and Validation (ICST)*, April 2021, 205-216
- **H. HUANG** ; **L. YANG** ; **Y. WANG** ; **X. XU** ; **Y. LU**. Digital Twin-driven Online Anomaly Detection for an Automation System based on Edge Intelligence. *Journal of Manufacturing Systems*, April 2021, vol. 59, 138-150